# EUROPÄISCHE PATENTANMELDUNG

(11) **EP 1 065 873 A2**
(43) Veröffentlichungstag der Anmeldung: **03.01.2001**
(21) Anmeldenummer: 00110648.3
(22) Anmeldetag: 18.05.2000
(51) Int. Cl.: H04M 15/00, H04Q 3/00

(54) **Anordnung zur Gebührenerhebung in einem Telefonnetz und Verfahren zum Betrieb einer solchen**

(30) Priorität: 15.06.1999 DE 19927296
(71) Anmelder: SIEMENS AKTIENGESELLSCHAFT, 80333 München (DE)
(72) Erfinder: Gundlach, Michael, Dr., 81739 München (DE)

(57) **Zusammenfassung**

Anordnung zur Gebührenerhebung in einem Telefonnetz, wobei ein erster Teilnehmer mindestens einen Teil der Gebühren für von einem zweiten Teilnehmer zu ihm hergestellte Verbindungen trägt, wobei mit dem Telefonnetz ein intelligentes Netz verknüpft ist und bei einem Dienststeuerungsknoten (SCP) oder Dienstknoten (SN) des intelligenten Netzes Steuermittel zur Gebührenzuweisung für vom zweiten Teilnehmer zum ersten Teilnehmer hergestellte Verbindungen an den ersten Teilnehmer aufweist.

## Beschreibung

Die Erfindung betrifft eine Anordnung zur Gebührenerhebung in einem Telefonnetz nach dem Oberbegriff des Anspruchs 1 sowie ein Verfahren zum Betrieb einer solchen Anordnung.

Telefonische Kontakte haben im modernen Geschäftsleben einen hohen Stellenwert, und ihre Bedeutung ist im Zusammenhang mit der stürmischen Entwicklung der mobilen Telefonie einerseits und der verknüpften elektronischen Datenverarbeitung andererseits in den letzten Jahren ständig weiter gewachsen. Ein Ende dieser Entwicklung ist nicht in Sicht.

In diesem Zusammenhang praktiziert eine zunehmende Anzahl von Firmen zur Pflege ihrer Kundenkontakte die Einrichtung gebührenfreier oder gebührenermäßigter Rufnummern, wie des 0130- oder 0800-Service einerseits (gebührenfrei) oder der 0180-Dienste (gebührenermäßigt). Diese Praxis geht von der Überlegung aus, daß Kunden die Möglichkeit eines gebührenfreien oder ermäßigten telefonischen Kontaktes als wesentlichen Service der entsprechenden Firma werten und gern in Anspruch nehmen, während sie vielfach Telefonate mit normaler Gebührenbelastung gar nicht führen und u.U. dann den Kontakt zur entsprechenden Firma nicht halten würden.

Die Schaltung gebührenfreier Rufnummern hat allerdings den Nachteil, daß diese Rufnummern für jedermann grundsätzlich unbeschränkt zugänglich sind und daher mißbraucht werden können, was in der Praxis auch vorkommt. So können böswillige Anrufer - u.U. sogar mittels automatisch generierter Rufe - eine beträchtliche Gebührenbelastung für die Firma erzeugen, die eine gebührenfreie oder -ermäßige Rufnummer geschaltet hat. Zudem haben solche Praktiken zur Folge, daß die entsprechende Rufnummer unnötig oft belegt ist und ihren Wert für die übrigen Kunden weitgehend verliert.

Der Erfindung liegt daher die Aufgabe zugrunde, eine verbesserte gattungsgemäße Anordnung sowie ein Verfahren zum Betrieb einer solchen anzugeben, mit denen ein Mißbrauch der Möglichkeit einer gebührenfreien oder -ermäßigten telefonischen Kontaktaufnahme zu einem bestimmten Teilnehmer weitgehend verhindert werden kann.

Diese Aufgabe wird hinsichtlich ihres Vorrichtungsaspektes gelöst durch eine Anordnung mit den Merkmalen des Anspruchs 1 und hinsichtlich ihres Verfahrensaspektes durch ein Verfahren mit den Merkmalen des Anspruchs 8.

Die Erfindung schließt gemäß einem ersten Aspekt den wesentlichen Gedanken ein, auf der Basis der Möglichkeiten eines intelligenten Netzes (IN = Intelligent Network) seitens eines ersten Netzteilnehmers nur ausgewählten weiteren Netzteilnehmern die Berechtigung zu gebührenfreien oder -ermäßigten Anrufen einzuräumen und diese Berechtigung ggfs. auch kurzfristig wieder zu entziehen. Durch die Begrenzung des berechtigten Kreises wird von Anfang an eine vorbestimmte Auswahl getroffen und damit ein Mißbrauch durch unbekannte Dritte verhindert. Weiterhin läßt sich nach Feststellung eines Mißbrauchs durch einen der begünstigten Berechtigten diesem einfach und schnell die Berechtigung wieder entziehen. In der Datenbasis ist also ständig eine begrenzte Anzahl vorbestimmter Teilnehmernummern bzw. -kennungen von Berechtigten gespeichert, weshalb sie auch als "White List" bezeichnet werden kann.

Gemäß einer anderen Umsetzung des erfindungsgemäßen Prinzips kann die Gebührenvergünstigungs-Datenbasis auch in Art einer "Black List" organisiert sein, d.h. lediglich Rufnummern bzw. Kennungen von Teilnehmern enthalten, denen keine Gebührenfreiheit oder -vergünstigung gewährt werden soll. Analog wie bei der ersten Art der Umsetzung ist auch hier eine ständige Aktualisierung durch Streichung oder Neuaufnahme von Einträgen möglich. Gegenüber der ersten Art und Weise der Umsetzung des Prinzips (White List) hat diese Variante den Vorteil, daß der Kreis der berechtigten Apriore nicht beschränkt ist, d.h. auch Neukunden, die noch nicht registriert sind, in den Genuß der Vergünstigung kommen. Der Preis für diesen werbestrategischen Vorteil ist die Inkaufnahme eines etwas höheren Mißbrauchsrisikos.

Schließlich ist es auch möglich, in der Datenbasis bestimmte Rufnummernbereiche für Berechtigte zu speichern, etwa bestimmte Anfangsziffern oder Anfangsziffernfolgen von Rufnummern, oder auch bestimmte andere Identifizierungsmerkmale.

Damit ein normaler Teilnehmer eines Festnetz- oder Mobilfunk-Telefonnetzes die Gebührenvergünstigung für seine Kunden steuern kann, ist in dem ihm zugeordneten Dienstvermittlungsknoten ein Triggerpunkt zur Auslösung des Zugriffs zur Gebührenvergünstigungs-Datenbasis zu setzen, über den eine Verbindungsaufnahme zum Dienststeuerungsknoten SCP (Service Control Point) aktiviert wird, bei dem die Gebührenvergünstigungs-Datenbasis in Art eines SDP (Service Data Point) angebunden ist.

Hat hingegen der erste Teilnehmer - als Teilnehmer von UPT (Universal Personal Telecommunication) oder eines Schnurlos-Telefonnetzes CTM - eine Rufnummer des intelligenten Netzes, so wird stattdessen vom Dienstvermittlungsknoten des Anrufers eine Vermittlung zu einem SCP aufgebaut, wobei die Gebührenvergünstigungs-Leistung aktiviert werden kann. In diesem Fall entfällt der Triggerpunkt. Ähnliches gilt für den Fall, daß der erste Teilnehmer an einem IN-gesteuerten "Number Portability"-Dienst teilnimmt, der in Zukunft große Verbreitung erlangen dürfte. Auch hier ist kein spezieller Triggerpunkt im zugeordneten SSP erforderlich, weil für einen solchen Teilnehmer von der zuständigen Vermittlungsstelle ohnehin eine Verbindung zum SCP aufgebaut wird.

In einem sogenannten "verteilten" intelligenten Netz kann die beschriebene Funktionalität - da es hier einen Dienststeuerungsknoten im eigentlichen Sinne nicht gibt - durch einen Dienstknoten (SN = Service Node) gesteuert werden.

Für die Etablierung und Handhabung der Gebührenvergünstigungs-Datenbasis gibt es grundsätzlich zwei Möglichkeiten: Die komfortablere und für Großfirmen jedenfalls bevorzugte Möglichkeit besteht im Management über das Internet, genauer über einen sogenannten Web-CSC (Customer Service Control). Die zweite Möglichkeit besteht in der Nutzung eines normalen Telefons als Zugangseinrichtung zur Datenbasis, wobei Einträge, Änderungen bzw. Löschungen mittels des DTMF(Dual Tone Multiple Frequency)-Verfahrens vorgenommen werden können. In beiden Fällen versteht es sich, daß der erste Teilnehmer sich auf geeignete Weise authentisieren muß, beispielsweise durch Eingabe eines Paßwortes (speziell beim Internet-Zugang) oder einer PIN (speziell bei Nutzung eines Mobiltelefons für die Eingabe) oder durch andere Identifikationsmittel, beispielsweise auch physischer Art (Fingerabdruck, Retinamuster).

In einer bevorzugten Ausführungsform ist zusätzlich - da die Gebührenfreiheit bzw. -ermäßigung eines Anrufes sich bei der vorgeschlagenen Lösung nicht mehr an der Rufnummer selbst ablesen läßt - eine Benachrichtigung des Anrufers über die im eingräumte Gebührenfreiheit bzw. -ermäßigung vorgesehen. In der Regel wird hierzu eine Sprach-Nachricht für den Anrufer generiert werden; in speziellen Fällen sind aber auch andere Benachrichtigungswege möglich, beispielsweise unter Nutzung des SMS (Short Message Service) für Mobilfunkteilnehmer.

Vorteile und Zweckmäßigkeiten der Erfindung ergeben sich im übrigen aus den Unteransprüchen sowie der nachfolgenden Erläuterung eines bevorzugten Ausführungsbeispiels anhand der Figuren. Von diesen zeigen:
- Fig. 1: eine schematische Darstellung einer Anordnung gemäß einer ersten Ausführungsform der Erfindung, die sich auf ein klassisches intelligentes Netz stützt,
- Fig. 2: eine schematische Darstellung einer Anordnung gemäß einer zweiten Ausführungsform der Erfindung, die mittels eines verteilten intelligenten Netzes realisiert wird,
- Fig. 3: eine schematische Darstellung der Dateneingabe bei der ersten Ausführungsform unter Nutzung eines Festnetz- oder Mobilfunk-Endgerätes,
- Fig. 4: eine schematische Darstellung der Dateneingabe bei der ersten Ausführungsform unter Nutzung des Internet,
- Fig. 5: eine schematische Darstellung zur Steuerung der Vergebührung bei der ersten Ausführungsform und
- Fig. 6: eine schematische Darstellung zur Steuerung der Vergebührung bei der zweiten Ausführungsform.

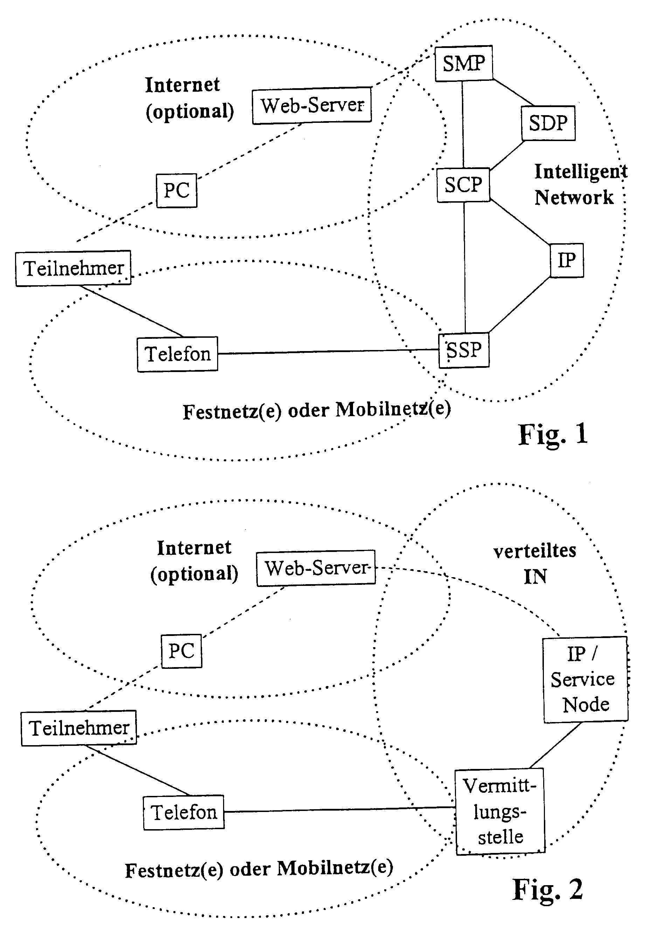

Wie Fig. 1 zu entnehmen ist, umfaßt die Anordnung zumindest ein Festnetz oder Mobilnetz mit einem dem Teilnehmer verfügbaren Telefon, ein intelligentes Netz (Intelligent Network) und einen die Schnittstelle zwischen Fest- bzw. Mobilnetz und dem Intelligent Network bildenden Dienstvermittlungsknoten SSP. Der Teilnehmer kann zum einen über das Telefon und den SSP zur Dateneingabe in die Gebührenvergünstigungs-Datenbasis SDP über den Dienststeuerungsknoten SCP auf diese zugreifen. Zum anderen kann er über den SCP und den SSP und schließlich über sein Telefon benachrichtigt werden, wobei auf eine von der intelligenten Peripherie IP gesteuerte Art und Weise eine Information über die Gebührenregelung übermittelt wird.

Alternativ kann zur Dateneingabe das Internet (oder in speziellen Fällen auch ein anderes IP-Netz) genutzt werden, wobei der Teilnehmer die Gebührenvergünstigungsdaten über einen PC eingibt, von wo sie über einen dedizierten Web-Server und den Dienstvermittlungsknoten SMP des Intelligent Network zur Termindatenbasis SDP gelangen. Diese Art der Dateneingabe ist komfortabler, setzt aber die Verfügbarkeit zusätzlicher Arbeitsmittel voraus.

In Fig. 2 ist eine modifizierte Architektur der vorgeschlagenen Anordnung unter Stützung auf ein sogenanntes verteiltes intelligentes Netz skizziert, bei dem Funktionalitäten des SMP und SCP (mit SDP - im vorliegenden Falle der Gebührenvergünstigungs-Datenbasis) und der IP in einer mit IP/Dienstknoten (IP/Service Node) zu bezeichnenden Funktionseinheit zusammengefaßt sind. Mit dieser ist der Web-Server des Internet direkt und ein Telefon in einem Festnetz oder Mobilnetz über eine Vermittlungsstelle verbunden.

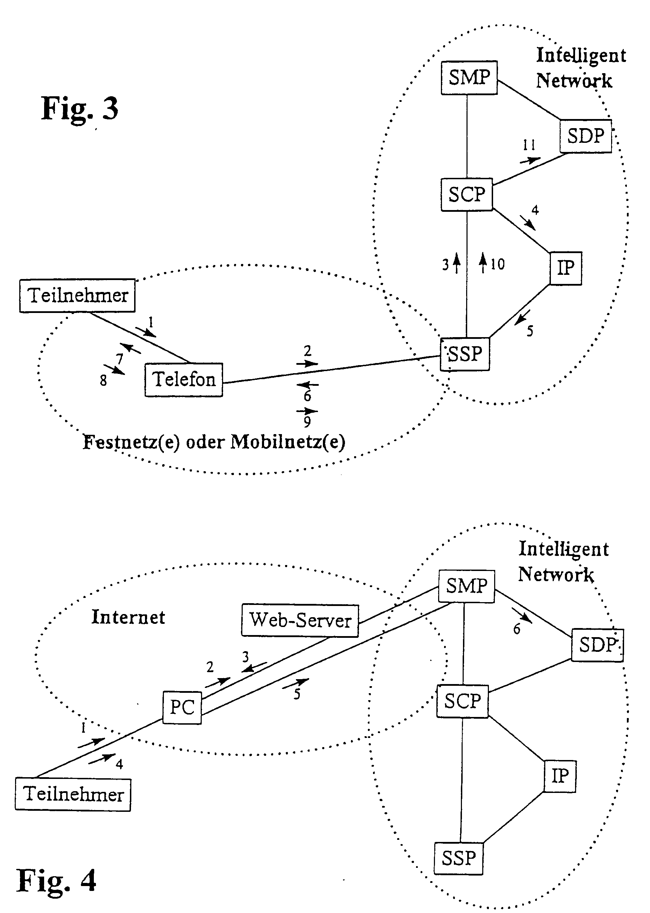

In Fig. 3 ist die Dateneingabe über das Telefon mittels des DTMF-Verfahrens in einer Schrittfolge von 1 bis 11 skizziert. Schritt 1 ist die Wahl der IN-Nummer am Telefon, von wo aus diese in einem Schritt 2 zum SSP gelangt, von dem aus im Schritt 3 eine Verbindung zum SCP hergestellt wird. Im Schritt 4 erfolgt vom SCP aus zur IP eine Ansagesteuerung, und die gewählte Ansage wird in den Schritten 5, 6 und 7 zunächst zum SSP, dann von diesem zum Telefon und schließlich vom Telefon zum Teilnehmer übermittelt. Nach Wahrnehmung der Ansage gibt der Teilnehmer in einem Schritt 8 die Gebührenvergünstigungsdaten ein, die dann in einem Schritt 9 vom Telefon zum SSP, im Schritt 10 vom SSP zum SCP und im Schritt 11 in die Gebührenvergünstigungs-Datenbasis SDP gelangen. Damit ist die Verankerung eines Berechtigten in der Gebührenvergünstigungs-Datenbasis abgeschlossen.

In Fig. 4 ist die Dateneingabe durch den Teilnehmer unter Nutzung seines PC und des World Wide Web skizziert. Zunächst wird durch den Teilnehmer in einem Schritt 1 die http-Adresse am PC eingegeben, der daraufhin in einem Schritt 2 eine Verbindung zum Web-Server herstellt, von wo in einem Schritt 3 ein Herunterladen der entsprechenden Seite erfolgt. Unter Stützung auf diese heruntergeladene Internet-Seite erfolgt in einem Schritt 4 die Eingabe der Gebührenvergünstigungsdaten am PC, von dem aus sie über den SMP des Intelligent Network zur Gebührenvergünstigungs-Datenbasis SDP geleitet werden (Schritte 4 und 5).

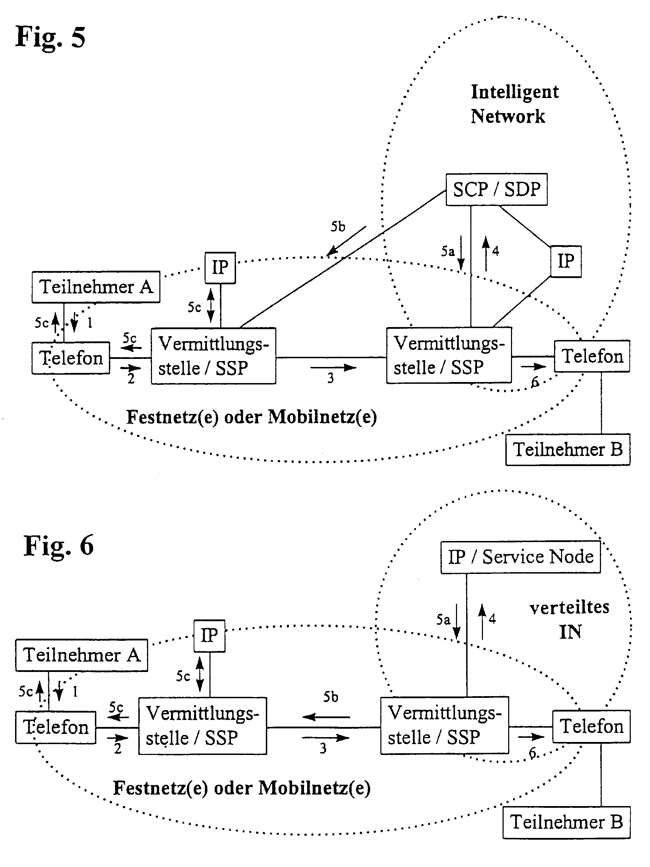

Nachfolgend wird unter Bezugnahme auf die Figuren 5 bzw. 6 die Steuerung der Vergebührung gemäß bevorzugter Ausführungsformen der Erfindung bei Einsatz eines klassischen bzw. verteilten intelligenten Netzes erläutert. In diesen Figuren und der nachfolgenden Beschreibung sind mit "Teilnehmer B" bzw. "B-Rufnummer" die die Gebührenvergünstigung gewährende Seite und mit "Teilnehmer A" bzw. "A-Rufnummer" die eine Gebührenvergünstigung in Anspruch nehmende Seite (Kunde) bezeichnet.

Mit dem Schritt 1 ist in beiden Figuren 5 und 6 der Schritt des Wählens der B-Rufnummer durch den Teilnehmer A bezeichnet, mit Schritt 2 die Weiterleitung der gewählten Rufnummer vom Festnetz- oder Mobilfunk-Endgerät (Telefon) des Teilnehmers A an die zugeordnete Vermittlungsstelle/SSP, und mit Schritt 3 die Weiterleitung an die Vermittlungsstelle/SSP des Teilnehmers B. Von dieser aus wird beim klassischen IN (Fig. 5) beim Dienststeuerknoten SCP, dem die Gebührenvergünstigungs-Datenbasis SDP zugeordnet ist, im Schritt 4 angefragt, wer mit den Gebühren für die aufgebaute Verbindung belastet werden soll. Dies geschieht durch einen Vergleich des Inhalts einer in der Gebührenvergünstigungs-Datenbasis SDP gespeicherten Rufnummernliste von privilegierten oder nicht-privilegierten A-Teilnehmern mit der Rufnummer des aktuell rufenden Teilnehmers A. Im Ergebnis dieses Vergleiches wird im Schritt 5a an die Vermittlungsstelle/SSP des Teilnehmers B ein Signal übermittelt, das das Ergebnis des Vergleiches reflektiert und somit die Antwort auf die im Schritt gestellte Anfrage enthält. Zugleich wird ein entsprechendes Signal vom SCP an die Vermittlungsstelle/SSP des Teilnehmers A ausgegeben. Über die Vermittlungsstelle/SSP des Teilnehmers B wird in einem Schritt 6 schließlich der Ruf zum Telefon des Teilnehmers B durchgeschaltet.

Bei der in Fig. 5 und 6 gezeigten Ausführung wird die Funktion realisiert, das mittels einer intelligenten Peripherie außerdem eine Benachrichtigung des Teilnehmers A über die Art der Gebührenerhebung abgesetzt. Diese Benachrichtigung wird in einem Schritt 5c insbesondere als Sprach-Nachricht (Ansage) oder spezielle Anzeigefunktion auf dem Display des Telefons des Teilnehmers A oder auch als charakteristischer Rufton realisiert.

Die Ausführung nach Fig. 6 unterscheidet sich von der nach Fig. 5 lediglich geringfügig im Zusammenwirken der Vermittlungsstelle/SSP des Teilnehmers A und des Teilnehmers B und beider mit dem IP/Service-Node des verteilten intelligenten Netzes. Dieser ist nämlich ausschließlich mit der Vermittlungsstelle SSP des Teilnehmers B verbunden, weshalb der oben erwähnte Schritt 5b der Ausgabe eines die Art der Gebührenerhebung kennzeichnenden Signals an die Vermittlungsstelle/SSP des Teilnehmers A über die Vermittlungsstelle/SSP des Teilnehmers B erfolgen muß.

Die Darstellung in beiden Figuren 5 und 6 beruht auf der Voraussetzung, daß der Teilnehmer B ein herkömmlicher, normaler Teilnehmer eines Festnetzes ist. Für einen Teilnehmer B, der an einem UPT-Dienst teilnimmt, sind die Schritte ab Schritt 3 sinnvoll zu modifizieren. In diesem Fall sind ggfs. weitere Dienststeuerknoten an dem Ablauf beteiligt, beispielsweise ein Home-SCP und Visited-SCP des Teilnehmers B, und es gibt zusätzliche relevante Schnittstellen, beispielsweise zwischen der Vermittlungsstelle/SSP des Teilnehmers A und einem Home-SCP des Teilnehmers B. Die entsprechenden Modifikationen lassen sich, beruhend auf den jeweils protokollgemäßen Schnittstellen und Komponenten, im Rahmen fachmännischen Handelns finden.

Auch im übrigen ist die Erfindung nicht auf die oben beschriebenen Ausführungsformen beschränkt, sondern ebenso in einer Vielzahl fachgemäßer Abwandlungen möglich.

## Patentansprüche

1. Anordnung zur Gebührenerhebung in einem Telefonnetz, wobei ein erster Teilnehmer mindestens einen Teil der Gebühren für von einem zweiten Teilnehmer zu ihm hergestellte Verbindungen trägt,
**dadurch gekennzeichnet,** daß
mit dem Telefonnetz ein intelligentes Netz verknüpft ist und bei einem Dienststeuerungsknoten (SCP) oder Dienstknoten (SN) des intelligenten Netzes Steuermittel zur Gebührenzuweisung für vom zweiten Teilnehmer zum ersten Teilnehmer hergestellte Verbindungen an den ersten Teilnehmer aufgrund eines Vergleiches der in einer Gebührenvergünstigungs-Datenbasis (SDP) gespeicherten Rufnummern oder Rufnummernbereiche mit der Rufnummer des zweiten Teilnehmers erfolgt, sowie
eine Zugangseinrichtung zur Gebührenvergünstigungs-Datenbasis zur Dateneingabe, -änderung oder -löschung vorgesehen ist.

2. Anordnung nach Anspruch 1,
**dadurch gekennzeichnet,** daß
die Steuermittel einen im Dienststeuerungsknoten (SCP) des ersten Teilnehmers gesetzten Triggerpunkt zur Auslösung des Zugriffs zur Gebührenvergünstigungs-Datenbasis (SDP) aufweisen.

3. Anordnung nach Anspruch 1,
**dadurch gekennzeichnet,** daß
die Steuermittel eine in einer IN-Rufnummer des ersten Teilnehmers implementierte Verknüpfungsanweisung zum Zugriff zum Dienststeuerungsknoten (SCP) oder Dienstknoten (SN) und damit zur Gebührenvergünstigungs-Datenbasis (SDP) aufweisen.

4. Anordnung nach einem der vorangehenden Ansprüche,
**dadurch gekennzeichnet,** daß
die Zugangseinrichtung ein Mobilfunk- oder Festnetz-Endgerät (Telefon) des ersten Teilnehmers und einen zugeordneten Dienstvermittlungsknoten (SSP) des intelligenten Netzes sowie eine Authentisierungseinrichtung, insbesondere eine Eingabeeinrichtung für eine PIN, umfaßt.

5. Anordnung nach einem der Ansprüche 1 bis 3,
**dadurch gekennzeichnet,** daß
die Zugangseinrichtung eine Internet-Zugangseinrichtung (PC), einen mit dieser verbindbaren Web-Server und einen mit diesem verbindbaren Dienstvermittlungsknoten (SMP) des intelligenten Netzes sowie eine Authentisierungseinrichtung, insbesondere Mittel zur Eingabe eines Paßwortes, aufweist.

6. Anordnung nach einem der vorangehenden Ansprüche,
**dadurch gekennzeichnet,** daß
die Gebührenvergünstigungs-Datenbasis (SDP) eine Positivliste von berechtigten Rufnummern ausgewählter zweiter Teilnehmer oder eine Negativliste von nicht-berechtigten Rufnummern ausgewählter zweiter Teilnehmer umfaßt.

7. Anordnung nach einem der vorangehenden Ansprüche,
**dadurch gekennzeichnet,** daß
dem Dienststeuerungsknoten (SCP) Mittel zur Generierung einer Sprachnachricht oder einer SMS-Nachricht sowie deren Übermittlung an den zweiten Teilnehmer über dessen Dienstvermittlungsknoten (SSP) zugeordnet sind.

8. Verfahren zur Gebührenerhebung in einem Telefonnetz, wobei ein erster Teilnehmer mindestens einen Teil der Gebühren für von einem zweiten Teilnehmer zu ihm hergestellte Verbindungen trägt,
**dadurch gekennzeichnet,** daß
mit dem Telefonnetz ein intelligentes Netz verknüpft ist und bei einem Dienststeuerungsknoten (SCP) oder Dienstknoten (SN) des intelligenten Netzes Steuermittel zur Gebührenzuweisung für vom zweiten Teilnehmer zum ersten Teilnehmer hergestellte Verbindungen an den ersten Teilnehmer aufgrund eines Vergleiches der in einer Gebührenvergünstigungs-Datenbasis (SDP) gespeicherten Rufnummern oder Rufnummernbereiche mit der Rufnummer des zweiten Teilnehmers und
über eine Zugangseinrichtung eine Dateneingabe, -änderung oder -löschung in der Gebührenvergünstigungs-Datenbasis erfolgt.

9. Verfahren nach Anspruch 8,
**dadurch gekennzeichnet,** daß
ein Zugriff zur Gebührenvergünstigungs-Datenbasis (SDP) über einen im Dienstvermittlungsknoten (SSP) des ersten Teilnehmers gesetzten Triggerpunkt ausgelöst wird.

10. Verfahren nach Anspruch 8,
**dadurch gekennzeichnet,** daß
ein Zugriff auf die Gebührenvergünstigungs-Datenbasis (SDP) durch eine in einer IN-Rufnummer des ersten Teilnehmers implementierte Verknüpfungsanweisung organisiert wird.

11. Verfahren nach einem der Ansprüche 8 bis 10,
**dadurch gekennzeichnet,** daß
Einträge, Änderungen oder Löschungen in der Gebührenvergünstigungs-Datenbasis (SDP) nach einer Authentisierung über ein Mobilfunk- oder Festnetz-Endgerät (Telefon) und den Dienstvermittlungsknoten des ersten Teilnehmers vorgenommen werden.

12. Verfahren nach einem der Ansprüche 8 bis 10,
**dadurch gekennzeichnet,** daß
Einträge, Änderungen oder Löschungen in der Gebührenvergünstigungs-Datenbasis (SDP) nach einer Authentisierung über einen Internetzugang (PC) des ersten Teilnehmers vorgenommen werden.

13. Verfahren nach einem der Ansprüche 8 bis 13,
**dadurch gekennzeichnet,** daß
bei Annahme eines Rufes eines zweiten Teilnehmers eine Sprach-Nachricht oder eine SMS-Nachricht zur Unterrichtung über die Berechtigung oder Nicht-Berechtigung zur Gebührenvergünstigung ausgegeben wird.
